# EUROPEAN PATENT SPECIFICATION

(11) **EP 1 518 367 B1**
(45) Date of publication and mention of the grant of the patent: **19.04.2006**
(21) Application number: 03732733.5
(22) Date of filing: 17.06.2003
(51) Int. Cl.: H04L 12/46

(54) **VLAN INHERITANCE**
VLAN-VERERBUNG
HERITAGE DE VLAN

(30) Priority: 19.06.2002 US 175197
(43) Date of publication of application: 30.03.2005
(73) Proprietor: Nortel Networks Limited, St.Laurent, Quebec H4S 2A9 (CA)
(72) Inventor: HEGGARTY, Jonathan, Carrickfergus, Antrim BT38 8PP (GB); HAMILTON, Kevin, Belfast, Antrim BT10 9HV (GB); KINNAIRD, Paul, Crumlin, Antrim BT29 4WN (GB)
(74) Representative: Hermele, Daniel Stephen
(86) International application number: PCT/GB2003/002637
(87) International publication number: WO 2004/002079

(56) References cited:
- WO-A-01/86906
- US-A- 5 684 800
- US-A- 6 111 876

## Description

### FIELD OF THE INVENTION

The present invention relates to a method of configuring the characteristics of a Virtual Local Area Network (VLAN), and a system incorporating the same.

### BACKGROUND TO THE INVENTION

A VLAN is a logical subgroup within a Local Area Network (LAN). VLANs provide enhanced security within a LAN environment by enabling devices typically communicating in TCP/IP protocols to gain secure group or private access to a foreign TCP/IP network that has a VLAN installed. Such services are experiencing a rising demand, however, at present it is costly and time-consuming to implement a VLAN.

For example, to implement a VLAN, the VLAN must usually be manually configured ahead of time on switching hardware, and in general only a relatively small finite number of VLANs can be configured on most switching hardware at any one time.

In order to provision a VLAN for a client, the VLAN requires an identifier so that the client's traffic can be appropriately tagged as belonging to that VLAN. VLANs are identified in accordance with IEEE 802.1Q. The IEEE 802.1Q standard describes how VLAN identification can be implemented by adding a "Q-Tag" to an Ethernet frame. A VLAN is thus implemented within a switching infrastructure, for example to provide increased security and increased functional decomposition within a large Ethernet network, by using this Q-Tag. An example of a method for identifying a VLAN from a VLAN identifier associated with a data frame received by a switch is the US Patent n. 6 111 876 "VLAN Frame Format" by Frantz et al.

Whilst a VLAN enables traffic to be separated into discrete broadcast domains based on the Q-tag field in the Ethernet frame header, at present the number of tags which the Ethernet frame header can support is not usually the limiting feature affecting the number of VLANs which can be supported by any specific hardware switching equipment. Currently, IEEE 802.1 Q provides the facility to support up to 4094 Q-tags in an Ethernet frame header. However, the finite number of VLANs which can be supported by any specific hardware switching equipment results from the drain on the resources of the switch which would ensue if 4094 VLANs were implemented in a conventional manner. The number of VLANs which can usually be supported by a switch in practice is therefore much less than the theoretical 4094 which IEEE 802.1Q supports.

Thus, whilst IEEE802.1Q presents a method to solve some aspects of scalability in an Ethernet network, implementing this method using conventional methods creates certain problems. For example, when deploying an Ethernet network, the cost, performance, and implementation is usually influenced by the capabilities of the switches and other network elements to be deployed in the network.

A port based VLAN is configured on a switch by associating ports on the switch with the VLAN. Conventionally, this process needs to be repeated for all VLANs which are to be configured on the switch (even if the port assignment is the same for all VLANs). This is a time-consuming process which also can be error prone. In addition to this, supporting a large number of VLANs is a strain on the resources of a switch. Support of 4094 VLANs on switches with associated attributes can place a considerable demand on the resources of a network processor and/or switch fabric. As an example, if 4094 VLANs are supported with 4 internal levels of QoS, over 16,000 individual flows will be required within the switch fabric. In addition, database tables will have to accommodate entries for each VLAN. The complexity of the switch fabric required can result in the support for such a large number of VLANs becoming highly expensive.

Hardware support for such a large number of VLANs results in an increase in the time taken to interrogate the forwarding database and assign the output flow for a particular frame. This impacts the performance of the device providing hardware support. Due to these problems, switch designers have often provided only minimal VLANs on switches, for example, twenty or so VLANs.

### OBJECT OF THE INVENTION

The invention seeks to provide a method of configuring the characteristics of a VLAN on a switch which reduces the strain on the resources of the switch. The invention thus provides a simpler mechanism to support, provision, and maintain VLANs on a switch. In particular, the invention enables all VLAN-ID values of the Q-tag in the Ethernet header to be supported without unduly burdening hardware or network management overhead resources.

The method proposed uses a VLAN inheritance mechanism which recognises that, within a switch configuration, there will likely be groups of VLANs all configured with the same attributes.

### SUMMARY OF THE INVENTION

A first aspect of the invention relates to a method of assigning at least one attribute for a first virtual local area network VLAN such that configuration of said first VLAN is facilitated in use comprising the steps of: receiving a frame of frame-based data; processing the frame to determine a first VLAN identifier; characterised by: associating said first VLAN identifier with a primary VLAN identifier said primary VLAN identifier identifying a pre-configured primary VLAN; and associating the set of at least one attribute of the first VLAN with a corresponding set of at least one attribute of said primary VLAN, such that the characteristics of an attribute in the set of at least one attribute of the first VLAN is determined by the characteristics of a corresponding attribute of the primary VLAN.

Preferably, in the step of receiving a frame of frame-based data, the frame-based data is OSI-layer 2 frame-based data.

More preferably, in the step of receiving a frame, the frame is an Ethernet frame.

Preferably, in the state of processing the frame to determine a first VLAN, the VLAN identifier is contained within the Q-tag of an Ethernet frame.

Preferably, in the step of associating the first VLAN identifier with a primary VLAN identifier, a look-up function is performed to retrieve data from a database which associates the first VLAN identifier with the primary VLAN identifier.

Preferably, the quality of service of the frame of frame-based data is assigned by an attribute of the primary VLAN.

Preferably, the priority of the frame of frame-based data is assigned by an attribute of the primary VLAN.

A second aspect of the invention relates to a switch infrastructure (100) comprising: an interface receiving frame-based data having a VLAN identifier; means to determine a VLAN-identifier for said frame-based data; characterised by comprising: means to associate said VLAN-identifier with another VLAN-identifier; and means to communicate with a database to assign a set of attributes to said received frame-based data VLAN-identifier according to the attributes stored for said another VLAN whose identifier is associated with said received data VLAN.

A third aspect of the invention relates to a computer readable medium storing a computer program arranged to implement a method of assigning at least one attribute for a first virtual local area network VLAN such that configuration of said first VLAN is facilitated in use, the method comprising the steps of: receiving a frame of frame-based data; processing the frame to determine a first VLAN identifier; associating said first VLAN identifier with a primary VLAN identifier, said primary VLAN identifier identifying a pre-configured primary VLAN; and associating the set of at least one attribute of the first VLAN with a corresponding set of at least one attribute of said primary VLAN, such that the characteristics of an attribute in the set of at least one attribute of the first VLAN is determined by the characteristics of a corresponding attribute of the primary VLAN.

Advantageously, therefore, the invention enables the cost and complexity of VLAN aware switches to be reduced so that a substantially large number of VLANs can be supported without having to modify the switch hardware. Advantageously, by associating the first VLAN with a primary VLAN, the VLAN support within a defined hardware platform is extended. This enables the development of competitively priced switches with increased functionality. This increased functionality is also easier to configure and hence deploy.

The preferred features may be combined as appropriate, as would be apparent to a skilled person, and may be combined with any of the aspects of the invention.

### BRIEF DESCRIPTION OF THE DRAWINGS

In order to show how the invention may be carried into effect, embodiments of the invention are now described below by way of example only and with reference to the accompanying figures in which:
Figure 1 A shows schematically how a new VLAN having independently assigned characteristics can be generated;
Figure 1 B shows schematically how a VLAN having characteristics associated with another VLAN can be generated.
Figure 2 shows schematically the hierarchical one-to-one and one-to-many dependencies of parent and child VLANs;
Fig. 3A shows a one-to-one flow across a switch; and
Figure 3B shows one-to-many flows across a switch.

### DETAILED DESCRIPTION OF INVENTION

The best mode of implementing the invention as currently anticipated by the inventors will now be described by way of reference to the accompanying drawings.

VLAN inheritance exploits the statistical likelihood that within a switch configuration it is likely that groups of VLANs will exist, and that these groups can be characterized by the fact that all VLANs within any individual group will be configured with the same attributes. Thus when configuring a group of VLANs which are characterized by having the same attributes, these attributes can be defined by a single VLAN configuration which can then be utilized to configure the remaining VLANs in that group.

The VLAN which is initially configured in a group of at least one VLANs is termed a 'primary VLAN'. Each group may consist of up to several VLANs, and several groups can exist in a single switch fabric. Here the term switch fabric is used in its conventional sense, i.e., as a facility for connecting any two (or more) service providers, a service provider being any addressable entity which provides application and administrative support to the client environment by responding to client requests and maintaining the operational integrity of the server.

The attributes of a primary VLAN can be selected and modified as desired. The other VLANs in the group which are then configured by associating them with the primary VLAN are known as 'secondary VLANs'. The attributes of secondary VLANs are determined by the attributes of the primary VLAN with which they are associated.

Consequently, provisioning the primary VLAN may perform provisioning of the entire group of VLANs and merely maintaining the primary VLAN may perform maintenance of all its associated secondary VLANs. In addition, as all attributes are shared within the group, table entries and switch fabric flows are only required for the primary VLAN as the secondary VLANs will share these resources. This can facilitate the support of limited hardware to support 4094 VLANS.

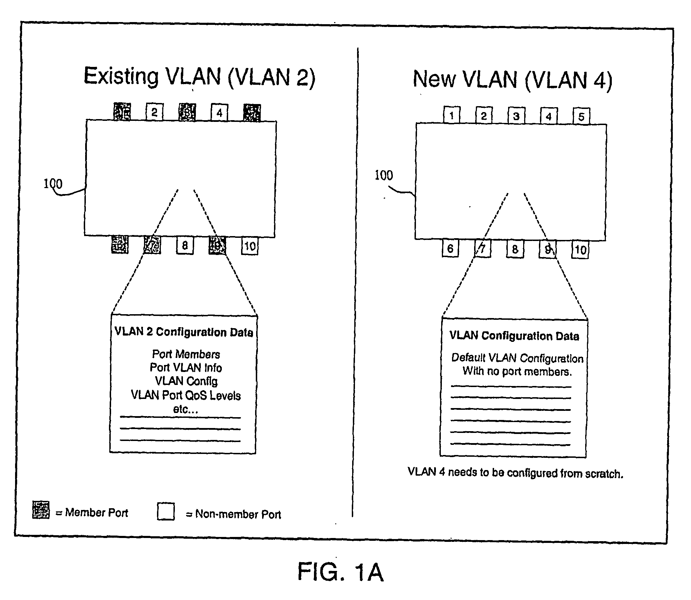

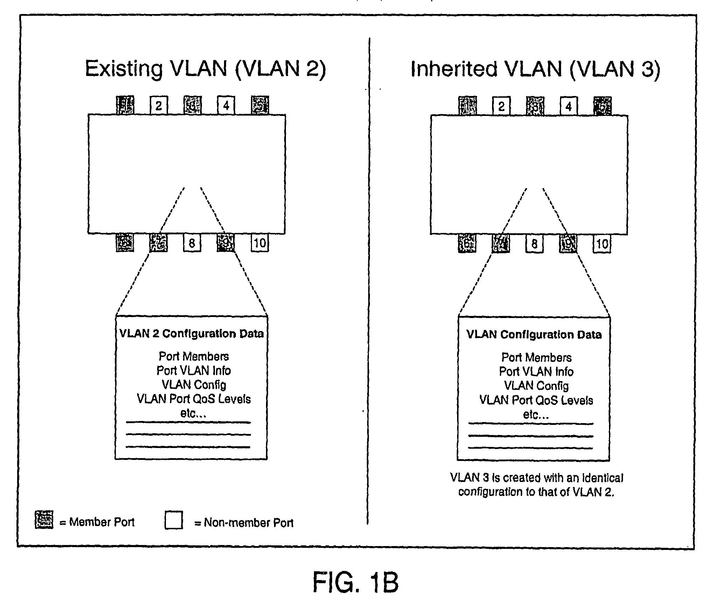

Referring now to the drawings, Figs. 1 A and 1 B demonstrate certain differences in the steps of the method of configuring a VLAN depending on whether a primary VLAN or secondary VLAN is to be created. Fig. 1A shows the creation of a primary VLAN and Fig. 1B shows the creation of a secondary VLAN according to the method.

In Fig. 1A, VLAN 2 is the designated primary VLAN for a specific group of VLANs which are to be implemented on a switch infrastructure 100. The switch infrastructure 100 is shown in Fig. 1 A to have ten ports which are available for receiving and sending client traffic.

In Fig. 1A, ports 1 to 10 are shown arranged anti-clockwise around the switch infrastructure. Ports 1, 3, 4, 6,7, and 9 are designated as ports which belong to VLAN 2, i.e., these are the ports via which traffic can be received from /send to a specific client who has requested a VLAN with the attributes of VLAN 2 for its traffic. All such ports will receive/send traffic which has been tagged with a Q-tag corresponding to the VLAN identifier (VLAN_ID) for VLAN 2. Ports 2, 4, 8, and 10 are not members for that ports which may receive untagged traffic, for example, non-secure traffic.

Once a client has requested a VLAN, VLAN 2 is set up to have appropriate attributes. Accordingly, Fig. 1A indicates some of the configuration data for VLAN 2 includes the following attributes:
the ports of the switch infrastructure 100 which are members of VLAN 2;
the VLAN-specific port info (for example, port forwarding/blocking,);
VLAN default QoS level;
STP state of VLAN (for example, learning enabled, forwarding enabled).
Discard tagged/untagged frames flags

If the same (or another) client requests another VLAN which needs to be implemented on the same switch infrastructure 100, this other VLAN is likely to need the same attributes. Fig. 1B shows schematically the other VLAN, VLAN 4.

Fig. 1 A shows how initially none of ports 1 to 10 are assigned as members to VLAN 4. VLAN 4 thus initially exists only with the default VLAN Config, and has no port members assigned as members. Conventionally, therefore, before VLAN 4 can be implemented, VLAN 4 will need to have its attributes manually configured from scratch, which is a time-consuming process.

Fig. 1B shows VLAN 2 which is equivalent to VLAN 2 shown in Fig. 1 A. In contrast, however, VLAN 3 in Fig. 1B is designated a secondary VLAN belonging to the same group as VLAN 2. In the best mode of the invention contemplated by the inventors, secondary VLAN 3 is automatically assigned the same attributes as primary VLAN 2. As VLAN 3 has inherited its configuration from VLAN 2, member ports are immediately assigned to VLAN 3, enabling client traffic to be tagged with VLAN 3 far more rapidly than if no primary/secondary attribute association occurred. Thus the invention advantageously reduces the time taken to implement VLANs in response to a clients request. A further advantage is that the creation of this inherited VLAN will consume considerably less hardware resources than the creation of a new VLAN, thus enabling more VLANs to be implemented on a switch infrastructure without adversely impacting the resources of the switch infrastructure

In summary, by providing a mechanism for a secondary VLAN to inherit details of the attributes and hardware resources of a primary VLAN, the invention enables a more optimal utilization of hardware resources with the effect that a greater number of VLANs can be supported on a particular hardware platform. The inheritance process also addresses the configuration problem associated with deploying large numbers of VLANs by providing a method of quickly adding another VLAN.

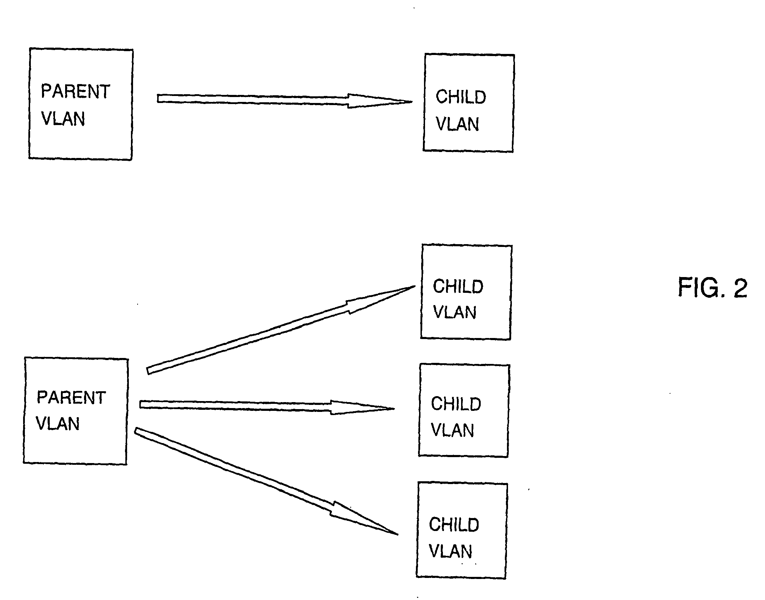

Fig. 2 shows schematically how a single primary VLAN (designated a "parent" LAN in Fig. 2) can be associated with either a single secondary VLAN or a plurality of secondary VLANs (designated a "child" VLAN in Fig. 2). In this way, by associating a single primary VLAN with a plurality of secondary VLANs, the number of VLANs supported by a switch infrastructure can be up to the limit imposed by the Q-tag size in the Ethernet frame header, i.e., up to 4094 VLANs can in fact be implemented in a switch infra-structure without unduly impacting the performance of the switch in an adverse manner.

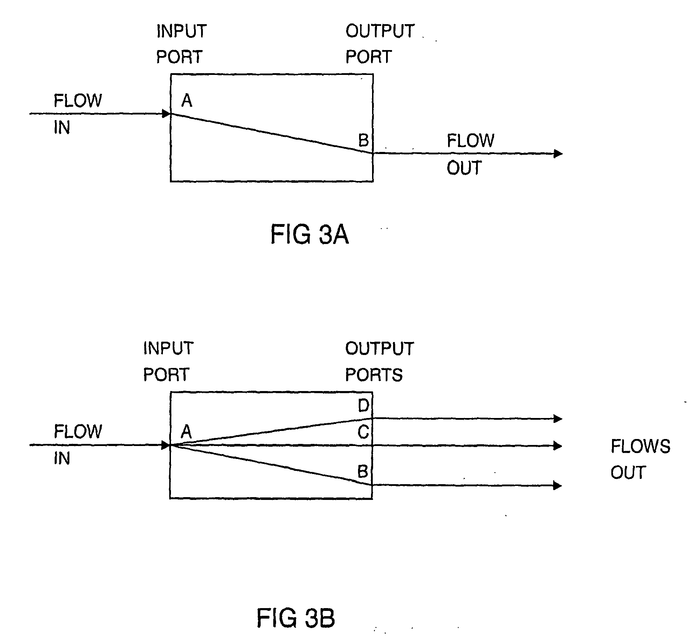

The association process between secondary and primary VLANs is implemented as follows. Firstly, consider the case where an Ethernet frame is received at an input port A (see Fig. 3A), the Q-tag is determined and a look-up function performed to determine where the frame should be routed to. The look-up function accesses a database containing data entries which enable the appropriate VLAN_ID to be identified for a particular Q-tag, and additional data entries which associate that VLAN_ID with a primary VLAN_ID. If a primary VLAN_ID is associated with a particular Q-tag, then the Ethernet frame is designated as belonging to a VLAN which has the same attributes as the primary VLAN. In Fig. 3A, traffic flowing in along input port A will always output via output port B, as the VLAN corresponding to the Q-tag for that traffic indicates that traffic arriving via port A should be sent out via B.

However, in Fig. 3B, depending on the client traffic's Q-tag, it is possible for different traffic to be received at port A and is routed to a number of output ports, for example, B, C, or D as shown in Fig. 3B via an appropriate flow or logical connection. In this manner, the resources of the switch can be better utilised and the capacity of the switch is used more efficiently. Moreover, traffic priorities and Quality of Service can be assigned differently within a VLAN than in the external environment by associating traffic to be prioritised with a specific primary VLAN which assigns a high-priority attribute to the traffic. Thus in Fig. 3B, each flow within the switch infrastructure can be assigned a different quality of service, and the prioritisation of traffic can be used to schedule how traffic is sent from the output ports B, C, and D.

Any range or device value given herein may be extended or altered without losing the effect sought, as will be apparent to the skilled person for an understanding of the teachings herein.

## Claims

1. A method of assigning at least one attribute for a first virtual local area network VLAN such that configuration of said first VLAN is facilitated in use comprising the steps of:-
receiving a frame of frame-based data;
processing the frame to determine a first VLAN identifier;
**characterised by**:
associating said first VLAN identifier with a primary VLAN identifier said primary VLAN identifier identifying a pre-configured primary VLAN; and
associating the set of at least one attribute of the first VLAN with a corresponding set of at least one attribute of said primary VLAN, such that the characteristics of an attribute in the set of at least one attribute of the first VLAN is determined by the characteristics of a corresponding attribute of the primary VLAN.

2. A method as claimed in claim 1, wherein in the step of receiving a frame of frame-based data, the frame-based data is OSI-layer 2 frame-based data.

3. A method as claimed in any preceding claim, wherein in the step of receiving a frame, the frame is an Ethernet frame.

4. A method as claimed in any preceding claim, wherein in the state of processing the frame to determine a first VLAN, the VLAN identifier is contained within a Q-tag of an Ethernet frame.

5. A method as claimed in any preceding claim, wherein in the step of associating the first VLAN identifier with a primary VLAN identifier, a look-up function is performed to retrieve data from a database which associates the first VLAN identifier with the primary VLAN identifier.

6. A method as claimed in any preceding claim, wherein the quality of service of the frame of frame-based data is assigned by an attribute of the primary VLAN.

7. A method as claimed in any preceding claim, wherein the priority of the frame of frame-based data is assigned by an attribute of the primary VLAN.

8. A method as claimed in any preceding claim which is computerised.

9. A switch infrastructure (100) comprising:
an interface receiving frame-based data having a VLAN identifier;
means to determine a VLAN-identifier for said frame-based data;
**characterised by** comprising:
means to associate said VLAN-identifier with another VLAN-identifier; and
means to communicate with a database to assign a set of attributes to said received frame-based data VLAN-identifier according to the attributes stored for said another VLAN whose identifier is associated with said received data VLAN.

10. A virtual local area network having at least one network element **characterised by** comprising a switch infrastructure as claimed in claim 9.

11. A computer readable medium storing a computer program arranged to implement a method of assigning at least one attribute for a first virtual local area network VLAN such that configuration of said first VLAN is facilitated in use, the method comprising the steps of:-
receiving a frame of frame-based data;
processing the frame to determine a first VLAN identifier;
associating said first VLAN identifier with a primary VLAN identifier, said primary VLAN identifier identifying a pre-configured primary VLAN; and
associating the set of at least one attribute of the first VLAN with a corresponding set of at least one attribute of said primary VLAN, such that the characteristics of an attribute in the set of at least one attribute of the first VLAN is determined by the characteristics of a corresponding attribute of the primary VLAN.

## Revendications

1. Procédé destiné à allouer au moins un attribut pour un premier réseau local virtuel VLAN de telle sorte que la configuration dudit premier réseau VLAN soit facilitée en utilisation, comprenant les étapes de :
réception d'une trame de données de trame ;
traitement de la trame afin de déterminer un premier identifiant de réseau VLAN ;
**caractérisé par** :
l'association dudit premier identifiant de réseau VLAN à un identifiant de réseau VLAN primaire, ledit identifiant de réseau VLAN primaire identifiant un réseau VLAN primaire pré-configuré ; et
l'association de l'ensemble d'au moins un attribut du premier réseau VLAN à un ensemble correspondant d'au moins un attribut dudit réseau VLAN primaire, de telle sorte que les caractéristiques d'un attribut dans l'ensemble d'au moins un attribut du premier réseau VLAN soient déterminées par les caractéristiques d'un attribut correspondant du réseau VLAN primaire.

2. Procédé selon la revendication 1, dans lequel dans l'étape de réception d'une trame de données de trame, les données de trame sont des données de trame de couche 2 selon le modèle de référence OSI.

3. Procédé selon l'une quelconque des revendications précédentes, dans lequel dans l'étape de réception d'une trame, la trame est une trame Ethernet.

4. Procédé selon l'une quelconque des revendications précédentes, dans lequel dans l'étape de traitement de la trame afin de déterminer un premier réseau VLAN, l'identifiant de réseau VLAN est contenu dans un Q-tag d'une trame Ethernet.

5. Procédé selon l'une quelconque des revendications précédentes, dans lequel dans l'étape d'association du premier identifiant de réseau VLAN à un identifiant de réseau VLAN primaire, une fonction de consultation de table est exécutée afin de retrouver des données à partir d'une base de données qui associe le premier identifiant de réseau VLAN à l'identifiant de réseau VLAN primaire.

6. Procédé selon l'une quelconque des revendications précédentes, dans lequel la qualité de service de la trame de données de trame est allouée par un attribut du réseau VLAN primaire.

7. Procédé selon l'une quelconque des revendications précédentes, dans lequel la priorité de la trame de données de trame est allouée par un attribut du réseau VLAN primaire.

8. Procédé selon l'une quelconque des revendications précédentes, qui est informatisé.

9. Infrastructure de commutateur (100) comprenant :
une interface recevant des données de trame ayant un identifiant de réseau VLAN ;
des moyens destinés à déterminer un identifiant de réseau VLAN pour lesdites données de trame ;
**caractérisée par** le fait de comprendre :
des moyens destinés à associer ledit identifiant de réseau VLAN à un autre identifiant de réseau VLAN ; et
des moyens destinés à communiquer avec une base de données afin d'allouer un ensemble d'attributs audit identifiant de réseau VLAN des données de trame reçues selon les attributs stockés pour ledit autre réseau VLAN dont l'identifiant est associé audit réseau de VLAN des données reçues.

10. Réseau local virtuel ayant au moins un élément réseau **caractérisé par** le fait de comprendre une infrastructure de commutateur selon la revendication 9.

11. Support pouvant être lu par un ordinateur stockant un programme informatique adapté pour implémenter un procédé d'allocation d'au moins un attribut pour un premier réseau local virtuel VLAN de telle sorte que la configuration dudit premier réseau VLAN soit facilitée en utilisation, le procédé comprenant les étapes de :
réception d'une trame de données de trame ;
traitement de la trame afin de déterminer un premier identifiant de réseau VLAN ;
l'association dudit premier identifiant de réseau VLAN à un identifiant de réseau VLAN primaire, ledit identifiant de réseau VLAN primaire identifiant un réseau VLAN primaire pré-configuré ; et
l'association de l'ensemble d'au moins un attribut du premier réseau VLAN à un ensemble correspondant d'au moins un attribut dudit réseau VLAN primaire, de telle sorte que les caractéristiques d'un attribut dans l'ensemble d'au moins un attribut du premier réseau VLAN soient déterminées par les caractéristiques d'un attribut correspondant du réseau VLAN primaire.

## Patentansprüche

1. Verfahren zur Zuordnung von zumindest einem Attribut für ein erstes virtuelles lokales Netzwerk VLAN derart, dass die Konfiguration des ersten VLAN im Gebrauch erleichtert wird, mit den folgenden Schritten:
Empfangen eines Rahmens von Rahmen-basierten Daten;
Verarbeiten des Rahmens zur Feststellung einer ersten VLAN-Identifikation;
**gekennzeichnet durch**:
Zuordnen der ersten VLAN-Identifikation zu einer primären VLAN-Identifikation, wobei die primäre VLAN-Identifikation ein vorkonfiguriertes primäres VLAN identifiziert; und
Zuordnen des Satzes von zumindest einem Attribut des ersten VLAN zu einem entsprechenden Satz von zumindest einem Attribut des primären VLAN derart, dass die Charakteristiken eines Attributes in dem ersten Satz von zumindest einem Attribut des ersten VLAN **durch** die Charakteristiken eines entsprechenden Attributes des primären VLAN bestimmt sind.

2. Verfahren nach Anspruch 1, bei dem in dem Schritt des Empfangens eines Rahmens von Rahmen-basierten Daten die Rahmen-basierten Daten OSI-Schicht-2-Rahmen-basierte Daten sind.

3. Verfahren nach einem der vorhergehenden Ansprüche, bei dem in dem Schritt des Empfangens eines Rahmens der Rahmen ein Ethernet-Rahmen ist.

4. Verfahren nach einem der vorhergehenden Ansprüche, bei dem in dem Zustand der Verarbeitung des Rahmens zur Feststellung eines ersten VLAN die VLAN-Identifikation innerhalb einer Q-Marke eines Ethernet-Rahmens enthalten ist.

5. Verfahren nach einem der vorhergehenden Ansprüche, bei dem in dem Schritt der Zuordnung der ersten VLAN-Identifikation zu einer primären VLAN-Identifikation eine Nachschlage-Funktion ausgeführt wird, um Daten von einer Datenbank zu gewinnen, die die erste VLAN-Identifikation zu der primären VLAN-Identifikation zuordnet.

6. Verfahren nach einem der vorhergehenden Ansprüche, bei dem die Dienstgüte des Rahmens von Rahmen-basierten Daten durch ein Attribut des primären VLAN zugeordnet wird.

7. Verfahren nach einem der vorhergehenden Ansprüche, bei dem die Priorität des Rahmens von Rahmen-basierten Daten durch ein Attribut des primären VLAN zugeordnet wird.

8. Verfahren nach einem der vorhergehenden Ansprüche, das computerisiert ist.

9. Switch-Infrastruktur (100), mit:
einer Schnittstelle, die Rahmen-basierte Daten empfängt, die eine VLAN-Identifikation haben;
Einrichtungen zur Feststellung einer VLAN-Identifikation für die Rahmen-basierten Daten;
**gekennzeichnet durch**:
Einrichtungen zur Zuordnung der VLAN-Identifikation zu einer anderen VLAN-Identifikation; und
Einrichtungen zur Kommunikation mit einer Datenbank zur Zuordnung eines Satzes von Attributen zu der VLAN-Identifikation der empfangenen Rahmen-basierten Daten entsprechend den Attributen, die für das andere VLAN gespeichert sind, dessen Identifikation dem VLAN der empfangenen Daten zugeordnet ist.

10. Virtuelles lokales Netzwerk, das zumindest ein Netzwerk-Element aufweist, **dadurch gekennzeichnet, dass** es eine Switch-Infrastruktur nach Anspruch 9 umfasst.

11. Computerlesbares Medium, das ein Computerprogramm speichert, das so angeordnet ist, dass es ein Verfahren der Zuordnung von zumindest einem Attribut für ein erstes virtuelles lokales Netzwerk VLAN implementiert, wobei die Konfiguration des ersten VLAN im Gebrauch erleichtert wird, wobei das Verfahren die folgenden Schritte umfasst:
Empfangen eines Rahmens von Rahmen-basierten Daten;
Verarbeiten des Rahmens zur Feststellung einer ersten VLAN-Identifikation;
Zuordnen der ersten VLAN-Identifikation zu einer primären VLAN-Identifikation, wobei die primäre VLAN-Identifikation ein vorkonfiguriertes primäres VLAN identifiziert; und
Zuordnen des Satzes von zumindest einem Attribut des ersten VLAN zu einem entsprechenden Satz von zumindest einem Attribut des primären VLAN, derart, dass die Charakteristiken eines Attributes in dem Satz von zumindest einem Attribut des ersten VLAN durch die Charakteristiken eines entsprechenden Attributs des primären VLAN bestimmt sind.
